# EUROPEAN PATENT SPECIFICATION

(11) **EP 3 754 840 B1**
(45) Date of publication and mention of the grant of the patent: **26.07.2023**
(21) Application number: 19382525.4
(22) Date of filing: 21.06.2019
(51) Int. Cl.: H02S 20/32, H02S 20/10, H02S 30/10

(54) **PROTECTION SYSTEM AGAINST AN INCIDENT WIND IN A PHOTOVOLTAIC INSTALLATION AND PROTECTION METHOD OF A PHOTOVOLTAIC INSTALLATION AGAINST DAMAGE CAUSED BY AN INCIDENT WIND**
SCHUTZSYSTEM GEGEN EINEN EINHERGEHENDEN WIND IN EINER FOTOVOLTAISCHEN INSTALLATION UND SCHUTZMETHODE EINER FOTOVOLTAISCHEN INSTALLATION GEGEN SCHÄDEN DURCH EINEN EINHERGEHENDEN WIND VERURSACHT.
SYSTÈME DE PROTECTION CONTRE LE VENT INHÉRENT DANS UNE INSTALLATION PHOTOVOLTAÏQUE ET MÉTHODE DE PROTECTION D'UNE INSTALLATION PHOTOVOLTAÏQUE CONTRE LES DÉGÂTS PROVOQUÉS PAR UN VENT INHÉRENT

(43) Date of publication of application: 23.12.2020
(73) Proprietor: Soltec Innovations, S.L., 30500 Molina de Segura (ES)
(72) Inventor: LOPEZ OÑA, Sergio, 30506 Molina de Segura (ES); PAJARÓN SANTOS, Pablo, 30007 Murcia (ES)
(74) Representative: Isern Patentes y Marcas S.L.

(56) References cited:
- DE-A1-102007 040 318
- US-B1- 8 324 496

## Description

### Field of the Art

The present invention relates to a protection system for protecting a photovoltaic installation against incident wind and to a method for protecting a photovoltaic installation against damage caused by incident wind, using deflecting barriers arranged below the photovoltaic panels and duly distributed along the field the installation occupies.

### State of the Art

Photovoltaic installations or plants with multiple parallel and spaced apart rows of single-axis solar trackers are widely known.

Each single-axis solar tracker consists of an approximately horizontal central shaft with an approximate North-South orientation secured by couplings on supports that are arranged at regular intervals and allow rotation of the central shaft. A plurality of photovoltaic panels is fixed to said central shaft through a support structure, generating a solar collection plane.

An actuator device is kinematically connected to the central shaft of the solar tracker to cause rotation thereof, which allows inclining the solar collection eastward and westward, thereby allowing the sun exposure of the photovoltaic panels to be maximized by locating the solar collection plane substantially orthogonal to the direction of sunlight.

When wind of a certain strength blows, said photovoltaic panels may be affected, experiencing significant structural forces which may damage them and requiring preventive measures comprising control algorithms for reorienting the panels.

Fences which stop or mitigate incident wind are often erected surrounding the photovoltaic installation in order to reduce its effect on the single-axis trackers, however, their installation is expensive given that they must reach a considerable height which should ideally be greater than the height of the single-axis trackers, or at least of the shaft of said trackers, and they require a considerable structure that is capable of withstanding forces generated by the incident wind.

Documents US 8324496 B1, DE102010014016A1 and DE102011103304A1 describe a solar collection plant in which deflecting barriers are fixed on the rear face of the solar collectors hanging from same, said barriers modifying the impact of wind on said solar collectors by reducing the difference in the stresses the wind produces on the front face and rear face of the solar collector, and therefore reducing unwanted structural stresses produced on the solar collector.

The aforementioned document DE102011103304A1 also describes the use of a deflecting barrier in the form of a drop-down barrier that is fixed to the ground and can be raised vis-à-vis the solar collector panel to stop and divert part of the incident wind, reducing its impact on the solar collector.

However, this proposed deflecting barrier requires actuation for correct operation and entails a considerable cost and maintenance as it includes moveable elements.

Document WO2017007983A1 is also known, said document describing a method for protecting a photovoltaic installation whereby when a wind of a certain strength is detected, the photovoltaic panels are arranged with a specific inclination and an optimized configuration to channel the incident wind in a manner that prevents damaging the single-axis solar trackers. However, this document does not propose any solution to the incident wind circulating below the photovoltaic panels.

### Brief Description of the Invention

According to a first aspect, the present invention according to claim 1, relates to a protection system for protecting a photovoltaic installation against incident wind.

The photovoltaic installation to which this invention applies generally comprises a plurality of parallel and spaced apart rows of solar trackers, defining multiple intermediate rows comprised between two end rows located at two opposite ends of the photovoltaic installation. In other words, of all the multiple parallel rows forming the photovoltaic installation, those rows at the very end are named end rows, whereas all the rows located between them are named intermediate rows.

In that sense, each row is made up of solar trackers, typically single-axis solar trackers, which comprise, in a known manner in the prior art:
- a central shaft arranged at a predetermined distance from the ground by several supports arranged at regular intervals, the central shaft being coupled to the supports through couplings which allow free rotation of said central shaft;
- multiple photovoltaic panels integrally interconnected and attached by a support structure, such as module supports, to said central shaft, said photovoltaic panels defining a solar collection plane;
- at least one actuator device controlled by a control unit, the actuator device being kinematically connected to said central shaft for modifying the angular position of the central shaft by the actuation of the actuator device, causing the solar collection plane of the photovoltaic panels attached to the central shaft to rotate an angle with respect to the horizontal.

Typically, the actuator device will allow modifying the angle the photovoltaic panels form with respect to the horizontal in a range between +60° to -60° with respect to the horizontal.

Preferably, the control unit will be able to detect or know the exact angular position of the central shaft, for example by a sensor or through data provided by the actuator device, which thereby allows knowing the precise position of the photovoltaic panels.

However, the present invention furthermore proposes, in a manner not known in the known state of the art that:
- at least one row of the photovoltaic installation comprises a deflecting barrier, arranged below the photovoltaic panels for redirecting incident wind;
- each deflecting barrier extends between the supports of the corresponding row and cover between 40% and 65% of the predetermined distance existing between the central shaft and the ground, defining a passage between the deflecting barrier and the central shaft.

Each single-axis solar tracker of some of said rows will therefore include a corresponding deflecting barrier located between the supports of the corresponding central shaft, leaving a free passage between the deflecting barrier and the central shaft.

Preferably, the deflecting barrier will be located below the vertical of said central shaft, spaced apart from same, although it will be understood that a deflecting barrier having at least the upper end thereof located up to 30 cm in front of or behind the vertical of the central shaft can also be considered as being located below said central shaft, given that the technical effect is preserved.

The deflecting barrier will preferably be a stationary element that lacks movable parts, so it will entail a low cost and low maintenance.

When the photovoltaic panels of a row are inclined such that their front face is windward, i.e., partially exposed to incident wind that transversely strikes said end row, part of the incident wind will circulate above said front face and be diverted upwards as a result of the inclination of the photovoltaic panels.

However, if the rear face of the photovoltaic panels does not channel any incident wind flow, the pressure generated by the incident wind on the front face would be extremely high, and turbulences would furthermore be generated leeward of the photovoltaic panels, which may increase the stresses experienced by the photovoltaic panels, where it may even damage said panels.

To prevent these unwanted effects, it is proposed to include the deflecting barrier in the explained arrangement, blocking part of the incident wind at ground level, particularly wind perpendicular to the end row, and channeling another part of said incident wind through the passage existing between the deflecting barrier and the central shaft, conducting a wind flow below the photovoltaic panels.

In that sense, the incident wind will be divided into an upper air flow that will pass above the front face of the photovoltaic panels and a lower air flow that will pass below the rear face of the photovoltaic panels, both air flows balancing one another out and thereby reducing the stresses generated on the photovoltaic panels, and furthermore eliminating turbulences generated leeward of the photovoltaic panels.

The inclination of the photovoltaic panels will divert both air flows in an upward direction, and therefore keeping the incident wind away from the subsequent rows in the way of the incident wind, preventing the wind from striking and having any impact on the rows.

This solution therefore allows channeling the incident wind to the front face and rear face of the photovoltaic panels of the rows provided with a deflecting barrier, reducing the structural stresses experienced by said photovoltaic panels, while at the same time allows diverting said incident wind from the subsequent intermediate rows, all this by using a stationary deflecting barrier of little height and said barrier will therefore have a very small surface area as well as a reduced manufacturing, installation, and maintenance cost.

According to an additional embodiment, it is proposed for the support structure to be associated at least with the two end rows of the photovoltaic installation, which are the rows most exposed to incident wind.

Additionally, it is proposed to also locate the deflecting barrier in the intermediate rows adjacent to each end row of the photovoltaic installations, thereby defining two consecutive rows with a deflecting barrier. In other words, the first and second rows of the photovoltaic installation will include a deflecting barrier.

This feature allows the cumulative effect of the deflecting barriers of both rows to offer very significant protection to the remaining adjacent intermediate rows.

It is also proposed for a deflecting barrier to also be located in one or more of the intermediate rows of the photovoltaic installations, being arranged alternately with a predefined number of intermediate rows lacking a deflecting barrier. This is particularly useful in photovoltaic installations spanning a large area where there are many rows and where the wind protection effect offered by the deflecting barriers of the end rows or of the first two rows of the photovoltaic installation is reduced with distance. In other words, the protective effect will cover a predefined number of rows, but beyond that additional deflecting barriers must be introduced in intermediate rows to renew their protective effect on the subsequent predefined number of intermediate rows.

Alternatively, it is proposed for deflecting barriers to be located in consecutive pairs of intermediate rows of the photovoltaic installation, said consecutive pairs of intermediate rows being arranged alternately with a predefined number of intermediate rows lacking a deflecting barrier, for reasons similar to those set forth above.

It is proposed for the predefined number of intermediate rows lacking a deflecting barrier to be selected to generate a separation between 80 m and 120 m between the rows integrating the deflecting barriers, which is the distance considered as being protected by one of said deflecting barriers.

It is considered that the influence of the incident wind protection effect offered by a row provided with the mentioned deflecting barrier extends approximately 100 m windward of said row, so those rows comprised in that protected range do not require any deflecting barrier.

Preferably, each deflecting barrier is adjacent to or in contact with the ground, such that the incident wind can only be channeled through the aforementioned passage existing between the upper edge of the deflecting barrier and the central shaft.

Preferably, the deflecting barrier will be fixed to the supports and held by same, which allows utilizing the existing structure of the rows for fixing and supporting the deflecting barrier, greatly reducing costs.

It is also proposed for the deflecting barrier to have a porosity equal to or less than 60%. In other words, it is proposed for said deflecting barrier to have a certain porosity, which reduces structural stresses the wind generates as it strikes the barrier, and therefore allows simplifying its construction, reducing its weight, and lowering its cost; however, it is also proposed for said deflecting barrier to have no porosity, being completely impenetrable by the incident wind.

Ideally, the porosity will be comprised between 25% and 60%.

By way of example, it is proposed for the deflecting barrier to be selected from:
- sheet metal or perforated sheet metal;
- corrugated or ribbed sheet metal or perforated corrugated or ribbed sheet metal;
- fabric canvas or openworked fabric canvas;
- plastic canvas or openworked plastic canvas;
- wall or openworked wall; or
- earthen ridge.

Any of these solutions allows obtaining the described result, although its structural strength, installation cost, and maintenance will be very different, with the choice of the preferred solution being adaptable to each particular case.

Preferably, the deflecting barrier will be a vertical deflecting barrier, thereby improving its incident wind stopping and redirecting effect, although it is also contemplated for the barrier to be made in the form of an inclined plane which better channels said incident wind to the passage existing between the deflecting barrier and the central shaft.

It is furthermore proposed for the photovoltaic installation to include a determination device for determining the strength of the incident wind connected to the control units or a determination device for determining the strength and direction of the incident wind also connected to the control units, which thereby allows detecting when the incident wind exceeds a pre-established threshold which may entail a risk for the photovoltaic installation, allowing suitable orientation of the solar trackers.

Typically, it is considered that the predefined threshold beyond which the incident wind is considered damaging is 60 km/h.

The determination device for determining the strength of the incident wind can be a wind force sensor, for example an anemometer, whereas the determination device for determining the strength and direction of the incident wind can be an incident wind force sensor, such as an anemometer, in combination with an incident wind direction sensor, such as a weathercock, for example.

It will be understood that the control units can be multiple control units, one for each row or for each solar tracker, or there can also be only one centralized control unit which controls all the solar trackers of all the rows of the photovoltaic installation.

It has furthermore been envisaged that the mentioned deflecting barrier has some interruptions spanning a small area to allow the maintenance staff of the photovoltaic installation to pass therethrough.

According to a second aspect, the present invention according to claim 12, relates to a method for protecting a photovoltaic installation against damage caused by the wind by a protection system such as the one described, wherein at least one row of the photovoltaic installation comprises a stationary deflecting barrier arranged below the photovoltaic panels for redirecting incident wind.

The proposed method comprises the following steps:
- detecting incident wind with a speed greater than a predefined threshold;
- said control units actuating the actuator device of the solar trackers of the rows provided with deflecting barriers, positioning the corresponding photovoltaic panels in a deflecting position in which they form an angle between 30° and 60° with respect to the horizontal, the deflecting barrier of each solar tracker channeling part of the incident wind through the passage existing between the deflecting structure and the central shaft, and the photovoltaic panels in the deflecting position directing the incident wind upwards; and
- said control units actuating the actuator device of the solar trackers of the rows lacking deflecting barriers, positioning the corresponding photovoltaic panels in a standby position in the which they exhibit a minimum aerodynamic profile with respect to the incident wind.

In that sense, when wind with a speed which can be considered detrimental to the photovoltaic installation is detected, the method proposes for the solar trackers provided with a deflecting barrier to stop following the orientation of the sun so that they can be located in a designed deflecting position for, in collaboration with the deflecting barriers, channeling the incident wind into the aforementioned upper and lower air flows, reducing the influence thereof on the intermediate rows located windward of the rows integrating deflecting barriers, reducing the structural stresses caused by said incident wind on the barriers.

According to the principles of this invention, in said deflecting position the solar collection plane of the photovoltaic panels forms an angle between 30° and 60° with respect to the horizontal, the side of the photovoltaic panels being lower than the other opposite side, and the front face of said photovoltaic panels being partially exposed in an oblique manner to the incident wind striking the row, typically East-West or West-East wind.

The standby position is that in which the impact of the incident wind on the photovoltaic panels is minimized, typically it is a position in which said photovoltaic panels form an angle of 0° with respect to the horizontal, therefore being completely horizontal.

Additionally, the proposed method may comprise the following steps:
- detecting the direction of the incident wind, for example, by a weathercock which sends a signal to the control units of the actuator device of the trackers; and
- causing the actuation of all the solar trackers of the rows provided with deflecting barriers, with a front face of the corresponding photovoltaic panels being arranged windward according to the detected direction of the incident wind.

Alternatively, it is contemplated for the method to comprise detecting the existence of wind without specifying any direction, for example by an anemometer, which sends a signal to the control units of the actuator device of the trackers, causing in this situation actuation of the solar trackers of pairs of adjacent rows provided with a deflecting barrier, with the corresponding solar collection planes being arranged with mirror inclination, such that incident wind transverse to the photovoltaic installation will, regardless of its direction, strike photovoltaic panels with a corresponding windward front face for each pair of adjacent rows provided with a deflecting barrier.

It will be understood that two planes with mirror inclination are two planes forming one and the same angle with respect to the horizontal, but with the corresponding inclined slope in different symmetrical directions with respect to a vertical plane.

It will be understood that references to geometric position, such as for example, parallel, perpendicular, tangent, etc. allow deviations of up to ±5° with respect to the theoretical position defined by said nomenclature.

It will also be understood that the end values of any offered range of values may not be optimal and adaptations of the invention may be required so that said end values are applicable, said adaptations being within reach of one skilled in the art.

Other features of the invention will become apparent in the following detailed description of an embodiment.

### Brief Description of the Drawings

The foregoing and other advantages and features will be better understood based on the following detailed description of an embodiment in reference to the attached drawings which must be interpreted in an illustrative and non-limiting manner, in which:
Figure 1 shows a schematic cross-section view of the single-axis solar collectors of an end row and of an intermediate row adjacent to the end row, the solar panels being in a protective position, each single-axis solar collector showing a different embodiment of the deflecting barrier;
Figure 2 shows the same as Figure 1 but with each single-axis solar collector showing other different embodiments of the deflecting barrier;
Figure 3 shows a schematic cross-section view of a photovoltaic installation in which incident wind of a significant strength originating from the west has been detected, and in which the photovoltaic panels of the rows provided with deflecting barriers have been positioned in the deflecting position with the front face windward and the rest in standby position;
Figure 4 shows the same as Figure 3, but in a photovoltaic installation in which incident wind of a significant strength originating from the east has been detected;

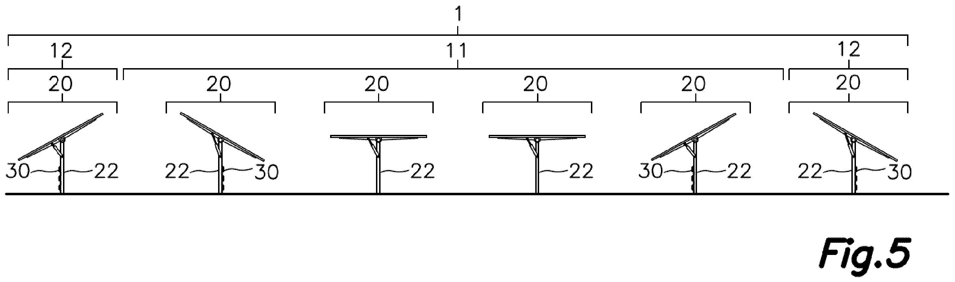

Figure 5 shows a schematic cross-section view of a photovoltaic installation in which incident wind of a significant strength of unknown origin has been detected, and in which the photovoltaic panels of the rows provided with deflecting barriers have been positioned in the deflecting position and the rest in standby position, the rows provided with deflecting barriers being pairs of consecutive rows the photovoltaic panels of which are positioned with mirror inclinations with respect to a vertical plane, one row having the respective photovoltaic panels arranged with the front face thereof facing west and the subsequent row having the front face thereof facing east;

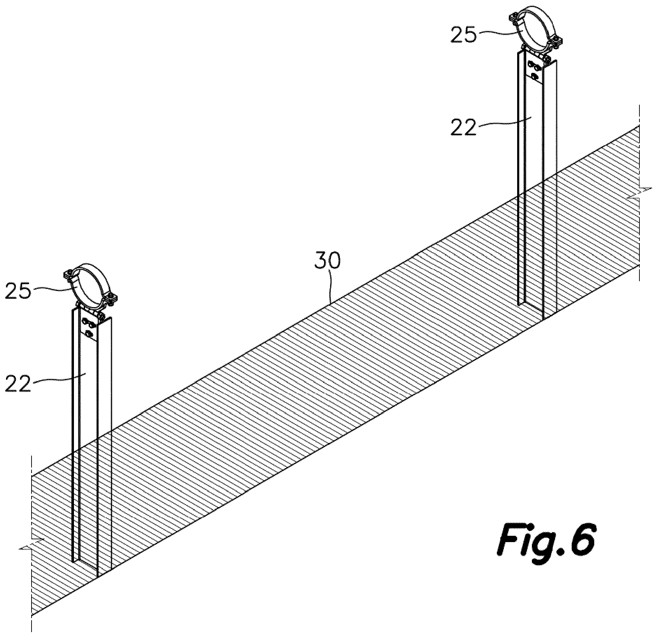

Figure 6 shows an enlarged detailed view of two supports in the form of vertical props with their corresponding couplings and in which the rest of the single-axis solar collector has not been shown, including an openworked deflecting barrier fixed on said supports according to an embodiment;
Figure 7 shows an enlarged detailed view of two supports in the form of trestles, one including a coupling and the other including an actuator device, and in which the rest of the single-axis solar collector has not been shown, including an openworked deflecting barrier fixed on said supports according to another embodiment.

### Detailed Description of an Embodiment

The attached drawings show illustrative non-limiting embodiments of the present invention.

The present invention applies to photovoltaic installations 1 with single-axis solar trackers 20.

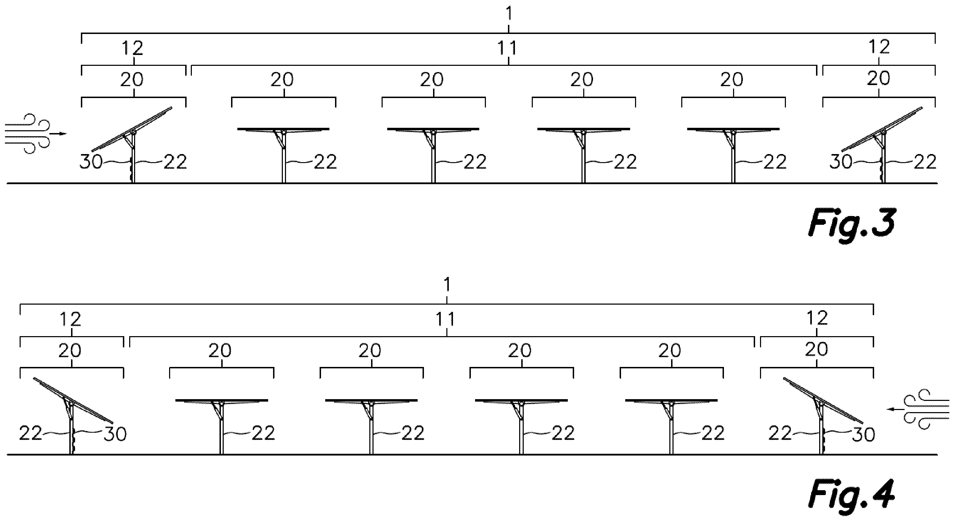

Figures 3, 4, and 5 show a cross-section of a photovoltaic installation 1 formed by six parallel rows of single-axis solar trackers 20 spaced apart equidistantly.

The first and last rows of the photovoltaic installation 1 are called end rows 12, whereas the remaining rows comprised between end rows 12 are called intermediate rows 11.

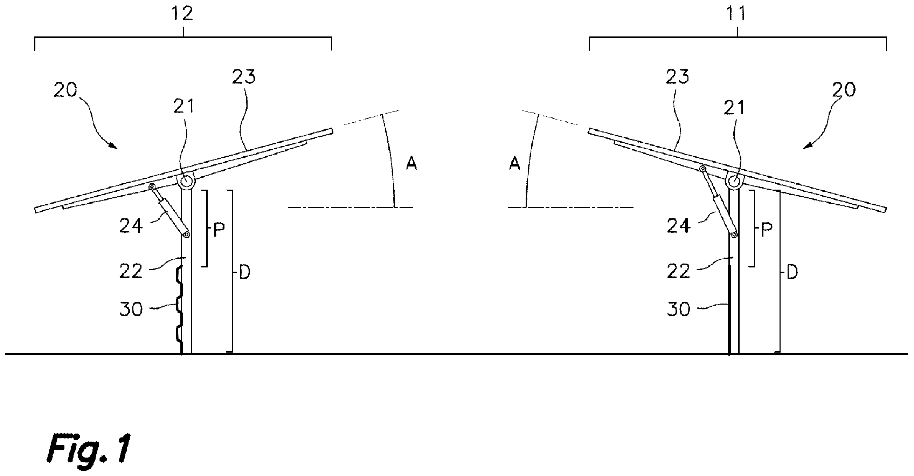

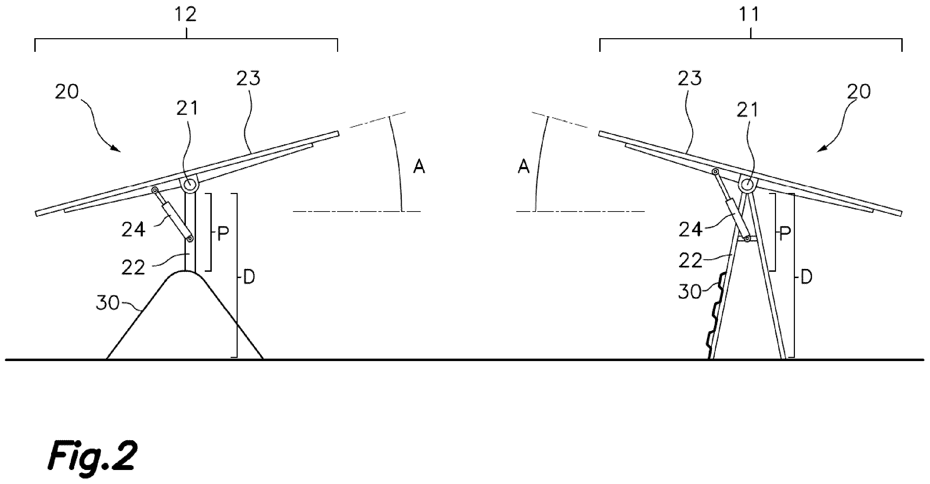

Each solar tracker 20, shown in more detail in Figures 1 and 2, consists of photovoltaic panels 23 the front face of which defines a solar collection plane. Said photovoltaic panels 23 are fixed on a support structure in the form of ribs extending symmetrically on both sides of a horizontal central shaft 21 having an approximate North-South orientation, the photovoltaic panels 23 therefore being centered and supported on said central shaft 21.

Supports 22 hold the central shaft 21 a specific distance D from the ground by couplings 25 which allow rotation of the central shaft 21 about its geometric axis, which allows inclining the solar collection plane an angle A eastward or westward.

Each solar tracker 20 includes at least one actuator device 24 which allows precisely modifying the angular position of the central shaft 21 and therefore the angle A of the photovoltaic panels 23 with respect to the horizontal.

According to the example shown in Figures 1 and 2, the actuator device 24 consists of a piston or linear motor connecting a point of a support 22 with a point of the support structure of the photovoltaic panels 23, such that by modifying the length thereof, the actuator device 24 modifies angle A.

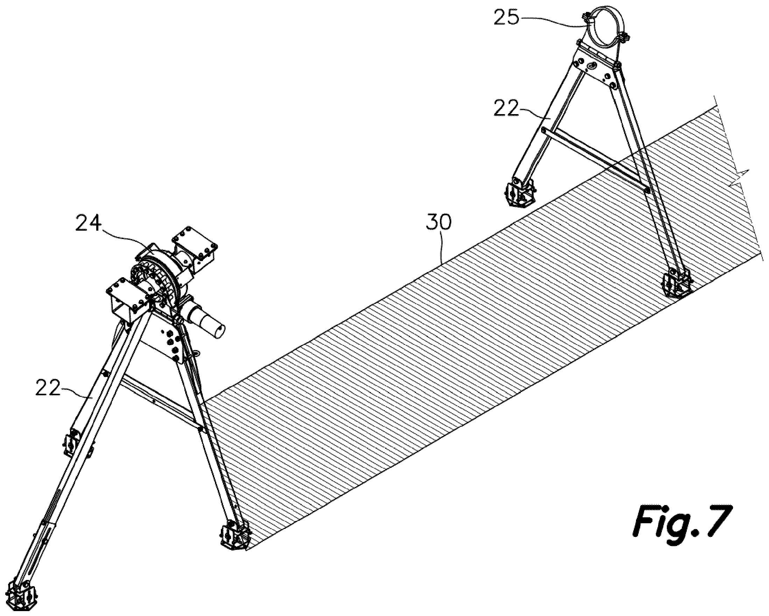

According to another embodiment shown in Figure 7, the actuator device consists of an electric motor connected to the central shaft 21 for determining its rotation. In this example, it is an electric motor concentric with the central shaft 21.

Other solutions of actuator devices 24 are also contemplated.

At least one control unit is connected to the actuator devices 24 of all the solar trackers 20 of the photovoltaic installation 1 for control thereof, where there may be one control unit for each solar tracker 20, for each row, or for the entire photovoltaic installation 1.

The control unit will be in charge of determining the angle A the solar collection planes form with respect to the horizontal at all times.

During normal operation, the control unit is in charge of orienting the photovoltaic panels 23 to maximize their electric production, following the position of the sun throughout the day.

In order to protect the photovoltaic installation 1 against damage caused by incident wind of a certain strength, the present invention furthermore proposes incorporating deflecting barriers 30 in the solar trackers 20 of some of the rows of the photovoltaic installation 1.

The deflecting barriers 30 are barriers located between the ground and the central shaft 21 of the corresponding solar tracker 20, between the supports 22 of the solar tracker 20. Said deflecting barrier 20 takes up between 40 and 65% of distance D existing between said ground and central shaft 21, leaving a free passage P between the upper end of the deflecting barrier 30 and the central shaft 21 and blocking the rest of said distance D.

In that sense, incident wind transverse to the row provided with the deflecting barrier 30 will hit against the deflecting barrier 30 below the photovoltaic panels 23 and be channeled through passage P.

It shall be considered that the deflecting barrier 30 is below the central shaft 21 when its upper end is located below the vertical projection of the central shaft 21 or up to 30 cm in front of or behind said vertical projection.

Figure 1 shows two examples of the proposed deflecting barrier 30. In a first example, the deflecting barrier 30 consists of a ribbed vertical sheet with the ribbing thereof arranged horizontally, the sheet being located between and fixed to the supports 22 of the solar tracker 20.

In a second example, it is proposed for the deflecting barrier 30 to be a vertical mesh, a piece of cloth, or a canvas stretched out between and fixed to the supports 22. In both cases, the possibility of said deflecting barrier 30 being an openworked or perforated barrier is contemplated, achieving up to 60% wind permeability, which allows reducing the aerodynamic load said deflecting barrier 30 must withstand, and therefore allows reducing construction cost.

Figure 2 shows other embodiments of the deflecting barrier 30. In one case, the deflecting barrier 30 formed by a ridge accumulated right below the central shaft 21 is shown, and in the other case a deflecting barrier 30 formed by a ribbed sheet is placed fixed in an inclined position on supports 22 in the form of a trestle.

In the present invention, when incident wind of a strength exceeding a predefined threshold is detected, for example through the connection thereof to an anemometer integrated in the photovoltaic installation 1 itself, or by the communication thereof with a weather station not related to the photovoltaic installation 1, it is proposed for the control unit to also be configured for locating the photovoltaic panels 23 of the solar collectors 20 associated with a deflecting barrier 30 in a deflecting position and the photovoltaic panels 23 of the solar collectors 20 lacking a deflecting barrier 30 in a standby position, as shown in Figures 3, 4, and 5.

In the deflecting position, the photovoltaic panels 23 are inclined to form an angle A between 30° and 60° with respect to the horizontal, preferably 45°.

Said angle allows the incident wind striking the front face of the photovoltaic panels 23 to be directed upwards, and the incident wind channeled through the passage P passes over the rear face of the photovoltaic panels 23, also being directed upwards while at the same time balancing out the pressure the incident wind exerts on the front face, reducing the dynamic loads which the photovoltaic panels 23 withstand and reducing turbulences leeward of the panels.

As a result of this configuration, the incident wind is diverted upwardly, preventing the incident wind from affecting successive rows of the photovoltaic installation 1.

In the standby position, the photovoltaic panels 23 are positioned at an angle A which minimizes their aerodynamic profile with respect to the incident wind, i.e., reduces the surface exposed to the incident wind. Typically, this angle A will be 0°, the photovoltaic panels 23 being horizontal.

When not only the strength, but also the direction of the incident wind is known, all the photovoltaic panels 23 associated with a deflecting barrier 30 will be inclined, exposing their front face windward, as shown in Figures 3 and 4.

When the direction of the wind is unknown, the photovoltaic panels 23 of two successive rows, both provided with deflecting barriers 30, will thus be placed in mirror deflecting position, i.e., both rows with the inclination of the respective photovoltaic panels 23 with a symmetrical inclination with respect to a vertical plane, with the rear faces of the photovoltaic panels 23 of both rows partially facing one another.

This configuration shown in Figures 1, 2, and 5 allows the incident wind to be diverted regardless of its direction, protecting the subsequent rows.

Preferably, the deflecting barriers 30 will be located in the end rows 12 most exposed to the incident wind, and optionally also in some of the intermediate rows 11, locating at least one deflecting barrier 30 every 80 and 120 meters.

Although this constitutes the preferred embodiment, it is also contemplated for the end rows 12 to not have any deflecting barrier 30, with the barriers located only in intermediate rows 11.

In the examples shown in Figures 3, 4, and 5, deflecting barriers 30 have only been included in the end rows 12 or in the intermediate rows 11 immediately adjacent to the end rows 12, however, in a photovoltaic installation with a larger number of intermediate rows 11 deflecting barriers 30 may also be additionally included in some intermediate rows 11, being arranged alternately with other intermediate rows 11 lacking deflecting barriers 30.

Ideally, deflecting barriers 30 will be located about every 100 meters, which is the distance considered as being protected by a deflecting barrier 30, i.e., the rows provided with deflecting barriers 30 will be spaced 80 m and 120 m apart, and as many intermediate rows 11 lacking deflecting barriers 30 that can fit therein will be included between them.

Likewise, pairs of intermediate rows 11 with deflecting barriers 30 which will be placed with the mirror arrangement shown in Figures 1 and 2 when incident wind is detected can be included about every 100 m.

It will be understood that the different parts making up the invention described in an embodiment can be freely combined with parts described in other different embodiments even though said combination has not been explicitly described, provided that the combination does not entail any drawback.

## Claims

1. A protection system for protecting a photovoltaic installation against incident wind, which comprises a plurality of parallel and spaced apart rows (11, 12) of solar trackers (20), defining multiple intermediate rows (11) comprised between two end rows (12) located at respective opposite ends of the photovoltaic installation (1), wherein each solar tracker (20) comprises:
• a central shaft (21) arranged at a predetermined distance (D) from the ground by multiple supports (22) arranged at regular intervals, the central shaft (21) being coupled to the supports (22) through couplings (25) which allow free rotation of the central shaft (21);
• multiple photovoltaic panels (23), interconnected and attached to said central shaft (21) by a support structure, defining a solar collection plane;
• at least one actuator device (24) controlled by a control unit, the actuator device (24) being kinematically connected to said central shaft (21) for modifying the angular position of the central shaft (21) by the actuation of the actuator device (24), causing the solar collection plane of the photovoltaic panels (23) attached to the central shaft (21) to rotate an angle (A) with respect to the horizontal;
• a deflecting barrier (30) comprised on at least one row (11, 12) of the photovoltaic installation (1) for redirecting the wind incident on said solar tracker (20);
**characterized in that**
each deflecting barrier (30) extends between the supports (22) of the corresponding row (11, 12), and is arranged under the photovoltaic panels (23) covering between 40% and 65% of the predetermined distance (D) existing between the central shaft (21) and the ground, defining a free passage (P) between the deflecting barrier (30) and the central shaft (21) for channeling, and diverting upwards, incident wind to a rear face of the photovoltaic panels (23), reducing the structural stresses experienced by said photovoltaic panels (23).

2. The protection system according to claim 1, wherein the deflecting barrier (30) is located at least in the two end rows (12).

3. The protection system according to claim 2, wherein the deflecting barrier (30) is also located in intermediate rows (11) adjacent to each end row (12) of the photovoltaic installation (1), defining two consecutive rows with a deflecting barrier (30).

4. The protection system according to any one of claims 1 to 3, wherein the deflecting barrier (30) is located in several of the intermediate rows (11) of the photovoltaic installations (11), being arranged alternately with a predefined number of intermediate rows (11) lacking a deflecting barrier (30).

5. The protection system according to any one of claims 1 to 3, wherein the deflecting barrier (30) is located in consecutive pairs of intermediate rows (11) of the photovoltaic installation (1), said consecutive pairs of intermediate rows (11) being arranged alternately with a predefined number of intermediate rows (11) lacking a deflecting barrier (30).

6. The protection system according to claim 4 or 5, wherein the predefined number of intermediate rows (11) lacking a deflecting barrier (30) is selected to generate a separation of between 80 m and 120 m between the rows (11, 12) integrating the deflecting barriers (30).

7. The protection system according to any one of the preceding claims, wherein each deflecting barrier (30) is adjacent to or in contact with the ground.

8. The protection system according to any one of the preceding claims, wherein the deflecting barrier (30) is fixed to the supports (22) and held by same.

9. The protection system according to any one of the preceding claims, wherein the deflecting barrier (30) is made of a material having a porosity equal to or less than 60%.

10. The protection system according to any one of the preceding claims, wherein the deflecting barrier is selected from a group consisting of:
• sheet metal or perforated sheet metal;
• corrugated or ribbed sheet metal or perforated corrugated or ribbed sheet metal;
• fabric canvas or openworked fabric canvas;
• plastic canvas or openworked plastic canvas;
• wall or openworked wall; and
• earthen ridge.

11. The protection system according to any of the preceding claims, wherein the photovoltaic installation (1) additionally comprises a determination device for determining the strength of the incident wind or a determination device for determining the strength and direction of the incident wind, said determination device being connected to the control units.

12. A method for protecting a photovoltaic installation against damage caused by incident wind by a protection system such as the one described in any of the preceding claims, the method comprising:
• detecting incident wind with a speed greater than a predefined threshold;
• actuating the actuator device (24) of the solar trackers (20) of the rows (11, 12) provided with deflecting barriers (30), positioning the corresponding photovoltaic panels (23) in a deflecting position in which they form an angle (A) between 30° and 60° with respect to the horizontal, diverting the incident wing upwards, away from the subsequent rows in the way of the incident wind;
• actuating the actuator device (24) of the solar trackers (20) of the rows (11, 12) lacking deflecting barriers (30), positioning the corresponding photovoltaic panels (23) in a standby position in the which they exhibit a minimum aerodynamic profile with respect to the incident wind;
**characterized in that** the method further comprises:
• channeling part of the incident wind through the free passage (P) defined under the photovoltaic panel (23), between the deflecting barrier (30) and the central shaft (21), and diverting said incident wind upwards to a rear face of the photovoltaic panels (23), reducing the structural stresses experienced by the photovoltaic panels (23) in the deflecting position.

13. The method according to claim 12, wherein the method further comprises:
• detecting the direction of the incident wind; and
• causing the actuation of all the solar trackers (20) of the rows (11, 12) provided with deflecting barriers (30), with a front face of the corresponding photovoltaic panels (23) being arranged windward according to the detected direction of the incident wind.

14. The method according to claim 12, wherein the method further comprises causing said actuation in solar trackers (20) of pairs of adjacent rows (11, 12) provided with a deflecting barrier (30), with the corresponding solar collection planes being arranged with mirror inclination, such that incident wind transverse to the photovoltaic installation will, regardless of its direction, strike photovoltaic panels (23) with a corresponding windward front face for each pair of adjacent rows (11, 12) provided with a deflecting barrier (30).

## Patentansprüche

1. Schutzsystem zum Schutz einer fotovoltaischen Anlage gegen einfallenden Wind, das eine Vielzahl von parallelen und beabstandeten Reihen (11, 12) von Solartrackern (20) umfasst, die mehrere Zwischenreihen (11) definieren, die zwischen zwei Endreihen (12) enthalten sind, die sich an jeweiligen gegenüberliegenden Enden der fotovoltaischen Anlage (1) befinden, wobei jeder Solartracker (20) Folgendes umfasst:
• eine zentrale Welle (21), die in einem vorbestimmten Abstand (D) vom Boden durch mehrere in regelmäßigen Intervallen angeordnete Stützen (22) angeordnet ist, wobei die zentrale Welle (21) mit den Stützen (22) über Kopplungen (25) gekoppelt ist, die eine freie Drehung der zentralen Welle (21) ermöglichen;
• mehrere fotovoltaische Kollektoren (23), die durch eine Stützstruktur miteinander verbunden und an der zentralen Welle (21) befestigt sind und eine Sonnensammelebene definieren;
• mindestens eine von einer Steuereinheit gesteuerte Aktuatorvorrichtung (24), wobei die Aktuatorvorrichtung (24) kinematisch mit der zentralen Welle (21) verbunden ist, um die Winkelposition der zentralen Welle (21) durch die Betätigung der Aktuatorvorrichtung (24) zu verändern, wodurch die Sonnensammelebene der an der zentralen Welle (21) angebrachten fotovoltaischen Kollektoren (23) um einen Winkel (A) in Bezug auf die Horizontale gedreht wird;
• eine Ablenkbarriere (30), die auf mindestens einer Reihe (11, 12) der fotovoltaischen Anlage (1) enthalten ist, um den auf den Solartracker (20) einfallenden Wind umzulenken;
**dadurch gekennzeichnet, dass**
jede Ablenkbarriere (30) sich zwischen den Stützen (22) der entsprechenden Reihe (11, 12) erstreckt und unter den fotovoltaischen Kollektoren (23) angeordnet ist, wobei sie zwischen 40 % und 65 % des vorbestimmten Abstands (D) abdeckt, der zwischen der zentralen Welle (21) und dem Boden besteht, wobei sie einen freien Durchgang (P) zwischen der Ablenkbarriere (30) und der zentralen Welle (21) definiert, um einfallenden Wind zu leiten und nach oben zu einer Rückseite der fotovoltaischen Kollektoren (23) abzulenken, wodurch die strukturellen Spannungen, denen die fotovoltaischen Kollektoren (23) ausgesetzt sind, reduziert werden.

2. Schutzsystem nach Anspruch 1, wobei sich die Ablenkbarriere (30) mindestens in den beiden Endreihen (12) befindet.

3. Schutzsystem nach Anspruch 2, wobei sich die Ablenkbarriere (30) auch in Zwischenreihen (11) befindet, die an jede Endreihe (12) der fotovoltaischen Anlage (1) angrenzen, wodurch zwei aufeinanderfolgende Reihen mit einer Ablenkbarriere (30) definiert werden.

4. Schutzsystem nach einem der Ansprüche 1 bis 3, wobei sich die Ablenkbarriere (30) in mehreren der Zwischenreihen (11) der fotovoltaischen Anlagen (11) befindet, wobei sie abwechselnd mit einer vorgegebenen Anzahl von Zwischenreihen (11) ohne Ablenkbarriere (30) angeordnet ist.

5. Schutzsystem nach einem der Ansprüche 1 bis 3, wobei sich die Ablenkbarriere (30) in aufeinanderfolgenden Paaren von Zwischenreihen (11) der fotovoltaischen Anlage (1) befindet, wobei die aufeinanderfolgenden Paare von Zwischenreihen (11) abwechselnd mit einer vorgegebenen Anzahl von Zwischenreihen (11) ohne eine Ablenkbarriere (30) angeordnet sind.

6. Schutzsystem nach Anspruch 4 oder 5, wobei die vorgegebene Anzahl von Zwischenreihen (11) ohne eine Ablenkbarriere (30) ausgewählt wird, um eine Trennung zwischen 80 m und 120 m zwischen den Reihen (11, 12), die die Ablenkbarrieren (30) integrieren, zu erzeugen.

7. Schutzsystem nach einem der vorhergehenden Ansprüche, wobei jede Ablenkbarriere (30) an den Boden angrenzt oder mit diesem in Kontakt ist.

8. Schutzsystem nach einem der vorhergehenden Ansprüche, wobei die Ablenkbarriere (30) an den Stützen (22) befestigt ist und von diesen gehalten wird.

9. Schutzsystem nach einem der vorhergehenden Ansprüche, wobei die Ablenkbarriere (30) aus einem Material besteht, das eine Porosität kleiner oder gleich 60 % aufweist.

10. Schutzsystem nach einem der vorhergehenden Ansprüche, wobei die Ablenkbarriere aus einer Gruppe ausgewählt ist, die besteht aus:
• Blech oder Lochblech;
• gewelltem oder geripptem Blech oder gewelltem oder geripptem Lochblech;
• Textilleinwand oder durchbrochener Textilleinwand;
• Kunststoffleinwand oder durchbrochener Kunststoffleinwand;
• Wand oder durchbrochener Wand; und
• Erdwall.

11. Schutzsystem nach einem der vorhergehenden Ansprüche, wobei die fotovoltaische Anlage (1) zusätzlich eine Bestimmungsvorrichtung zur Bestimmung der Stärke des einfallenden Windes oder eine Bestimmungsvorrichtung zur Bestimmung der Stärke und Richtung des einfallenden Windes umfasst, wobei die Bestimmungsvorrichtung mit den Steuereinheiten verbunden ist.

12. Verfahren zum Schutz einer fotovoltaischen Anlage vor Beschädigungen durch einfallenden Wind, durch ein Schutzsystem wie das in einem der vorhergehenden Ansprüche beschriebene, wobei das Verfahren Folgendes umfasst:
• Erkennen von einfallendem Wind mit einer Geschwindigkeit, die größer als ein vorgegebener Schwellenwert ist;
• Betätigen der Aktuatorvorrichtung (24) der Solartracker (20) der mit Ablenkbarrieren (30) versehenen Reihen (11, 12), indem die entsprechenden fotovoltaischen Kollektoren (23) in einer Ablenkposition gebracht werden, in der sie einen Winkel (A) zwischen 30° und 60° in Bezug auf die Horizontale bilden, wodurch der einfallende Wind nach oben, weg von den nachfolgenden Reihen im Weg des einfallenden Windes, abgelenkt wird;
• Betätigen der Aktuatorvorrichtung (24) der Solartracker (20) der Reihen (11, 12) ohne Ablenkbarrieren (30), indem die entsprechenden fotovoltaischen Kollektoren (23) in eine Bereitschaftsstellung gebracht werden, in der sie ein minimales aerodynamisches Profil in Bezug auf den einfallenden Wind besitzen;
**dadurch gekennzeichnet, dass** das Verfahren ferner Folgendes umfasst:
• Leiten von Teil des einfallenden Windes durch den freien Durchgang (P), der unter dem fotovoltaischen Kollektor (23), zwischen der Ablenkbarriere (30) und der zentralen Welle (21) definiert ist, und Ablenken des einfallenden Windes nach oben zu einer Rückseite des fotovoltaische Kollektoren (23), wodurch die strukturellen Spannungen, denen die fotovoltaischen Kollektoren (23) in der Ablenkposition ausgesetzt sind, reduziert werden.

13. Verfahren nach Anspruch 12, wobei das Verfahren ferner Folgendes umfasst:
• Erkennen der Richtung des einfallenden Windes; und
• Veranlassen der Betätigung aller Solartracker (20) der mit Ablenkbarrieren (30) versehenen Reihen (11, 12), wobei eine Vorderseite der entsprechenden fotovoltaischen Kollektoren (23) entsprechend der erkannten Richtung des einfallenden Windes windwärts angeordnet ist.

14. Verfahren nach Anspruch 12, wobei das Verfahren ferner das Veranlassen der Betätigung in Solartrackern (20) von Paaren von benachbarten Reihen (11, 12) umfasst, die mit einer Ablenkbarriere (30) versehen sind, wobei die entsprechenden Sonnensammelebenen mit einer Spiegelneigung angeordnet sind, sodass einfallender Wind quer zu der fotovoltaischen Anlage unabhängig von seiner Richtung auf fotovoltaische Kollektoren (23) mit einer entsprechenden windzugewandten Vorderseite für jedes Paar von benachbarten Reihen (11, 12), die mit einer Ablenkbarriere (30) versehen sind, auftreffen wird.

## Revendications

1. Système de protection pour la protection d'une installation photovoltaïque contre un vent incident, qui comprend une pluralité de rangées parallèles et espacées (11, 12) de suiveurs solaires (20), Définissant de multiples rangées intermédiaires (11) comprises entre deux rangées d'extrémité (12) situées à des extrémités opposées respectives de l'installation photovoltaïque (1), dans lequel chaque suiveur solaire (20) comprend :
• un arbre central (21) agencé à une distance prédéterminée (D) du sol par de multiples supports (22) agencés à des intervalles réguliers, l'arbre central (21) étant couplé aux supports (22) à travers des couplages (25) qui permettent une rotation libre de l'arbre central (21) ;
• de multiples panneaux photovoltaïques (23), interconnectés et attachés audit arbre central (21) par une structure de support, définissant un plan de collecte solaire ;
• au moins un dispositif actionneur (24) commandé par une unité de commande, le dispositif actionneur (24) étant connecté cinématiquement audit arbre central (21) pour la modification de la position angulaire de l'arbre central (21) par l'actionnement du dispositif actionneur (24), amenant le plan de collecte solaire des panneaux photovoltaïques (23) attachés à l'arbre central (21) à entrer en rotation d'un angle (A) par rapport à l'horizontale ;
• une barrière de déflexion (30) comprise sur au moins une rangée (11, 12) de l'installation photovoltaïque (1) pour la redirection de l'incident de vent sur ledit suiveur solaire (20) ;
**caractérisé en ce que**
chaque barrière de déflexion (30) s'étend entre les supports (22) de la rangée correspondante (11, 12), et est agencée sous les panneaux photovoltaïques (23) couvrant entre 40 % et 65 % de la distance prédéterminée (D) existant entre l'arbre central (21) et le sol, définissant un passage libre (P) entre la barrière de déflexion (30) et l'arbre central (21) pour la canalisation, et la déviation vers le haut, d'un vent incident sur une face arrière des panneaux photovoltaïques (23), réduisant les contraintes structurelles subies par lesdits panneaux photovoltaïques (23).

2. Système de protection selon la revendication 1, dans lequel la barrière de déflexion (30) est située au moins dans les deux rangées d'extrémité (12).

3. Système de protection selon la revendication 2, dans lequel la barrière de déflexion (30) est également située dans des rangées intermédiaires (11) adjacentes à chaque rangée d'extrémité (12) de l'installation photovoltaïque (1), définissant deux rangées consécutives avec une barrière de déflexion (30).

4. Système de protection selon l'une quelconque des revendications 1 à 3, dans lequel la barrière de déflexion (30) est située dans plusieurs des rangées intermédiaires (11) des installations photovoltaïques (11), étant agencées en alternance avec un nombre prédéfini de rangées intermédiaires (11) dépourvues de barrière de déflexion (30).

5. Système de protection selon l'une quelconque des revendications 1 à 3, dans lequel la barrière de déflexion (30) est située dans des paires consécutives de rangées intermédiaires (11) de l'installation photovoltaïque (1), lesdites paires consécutives de rangées intermédiaires (11) étant agencées en alternance avec un nombre prédéfini de rangées intermédiaires (11) dépourvues de barrière de déflexion (30).

6. Système de protection selon la revendication 4 ou 5, dans lequel le nombre prédéfini de rangées intermédiaires (11) dépourvues de barrière de déflexion (30) est choisi pour générer une séparation comprise entre 80 m et 120 m entre les rangées (11, 12) intégrant les barrières de déflexion (30).

7. Système de protection selon l'une quelconque des revendications précédentes, dans lequel chaque barrière de déflexion (30) est adjacente à ou en contact avec le sol.

8. Système de protection selon l'une quelconque des revendications précédentes, dans lequel la barrière de déflexion (30) est fixée aux supports (22) et maintenue par ceux-ci.

9. Système de protection selon l'une quelconque des revendications précédentes, dans lequel la barrière de déflexion (30) est composée d'un matériau ayant une porosité égale ou inférieure à 60 %.

10. Système de protection selon l'une quelconque des revendications précédentes, dans lequel la barrière de déflexion est choisie dans un groupe constitué de :
• tôle ou tôle perforée ;
• tôle ondulée ou nervurée ou tôle perforée ondulée ou nervurée ;
• toile en tissu ou toile en tissu ajouré ;
• toile en plastique ou toile en plastique ajourée ;
• mur ou mur ajouré ; et
• faîtage en terre.

11. Système de protection selon l'une quelconque des revendications précédentes, dans lequel l'installation photovoltaïque (1) comprend par ailleurs un dispositif de détermination pour la détermination de la force du vent incident ou un dispositif de détermination pour la détermination de la force et la direction du vent incident, ledit dispositif de détermination étant connecté aux unités de commande.

12. Procédé pour la protection d'une installation photovoltaïque contre les dommages causés par un vent incident par un système de protection tel que celui décrit dans l'une quelconque des revendications précédentes, le procédé comprenant :
• la détection d'un vent incident avec une vitesse supérieure à un seuil prédéfini ;
• l'actionnement du dispositif actionneur (24) des suiveurs solaires (20) des rangées (11, 12) pourvues de barrières de déflexion (30), positionnant les panneaux photovoltaïques correspondants (23) dans une position de déflexion dans laquelle ils forment un angle (A) compris entre 30° et 60° par rapport à l'horizontale, déviant le vent incident vers le haut, à l'écart des rangées suivantes dans le sens du vent incident ;
• l'actionnement du dispositif actionneur (24) des suiveurs solaires (20) des rangées (11, 12) dépourvues de barrières de déflexion (30), positionnant les panneaux photovoltaïques correspondants (23) dans une position d'attente dans laquelle ils présentent un profil aérodynamique minimum par rapport au vent incident ;
**caractérisé en ce que** le procédé comprend en outre :
• la canalisation d'une partie du vent incident à travers le passage libre (P) défini sous le panneau photovoltaïque (23), entre la barrière de déflexion (30) et l'arbre central (21), et la déviation dudit vent incident vers le haut sur une face arrière des panneaux photovoltaïques (23), réduisant les contraintes structurelles subies par les panneaux photovoltaïques (23) dans la position de déflexion.

13. Procédé selon la revendication 12, dans lequel le procédé comprend en outre :
• la détection de la direction du vent incident ; et
• la provocation de l'actionnement de tous les suiveurs solaires (20) des rangées (11, 12) pourvues de barrières de déflexion (30), avec une face avant des panneaux photovoltaïques correspondants (23) étant agencée au vent selon la direction détectée du vent incident.

14. Procédé selon la revendication 12, dans lequel le procédé comprend en outre la provocation dudit actionnement dans des suiveurs solaires (20) de paires de rangées adjacentes (11, 12) pourvues d'une barrière de déflexion (30), avec les plans de collecte solaire correspondants étant agencés avec une inclinaison de miroir, de telle sorte que le vent incident transverse à l'installation photovoltaïque, quelle que soit sa direction, frappera des panneaux photovoltaïques (23) avec une face avant au vent correspondante pour chaque paire de rangées adjacentes (11, 12) pourvues d'une barrière de déflexion (30).
